# EUROPEAN PATENT APPLICATION

(11) **EP 4 847 966 A1**
(43) Date of publication of application: **02.12.2026**
(21) Application number: 25179431.9
(22) Date of filing: 28.05.2025
(51) Int. Cl.: G01S 19/07

(54) **GENERATING, TRANSMITTING, AND USING INFORMATION RELATED TO ATMOSPHERIC EFFECTS FOR POSITIONING PURPOSES**

(71) Applicant: Trimble Inc, Westminster CO 80021 (US)
(72) Inventor: GOSS, Andreas, Höhenkirchen-Siegertsbrunn (DE); REXER, Moritz, Höhenkirchen-Siegertsbrunn (DE); WEINBACH, Ulrich, Höhenkirchen-Siegertsbrunn (DE)
(74) Representative: Hoffmann Eitle

(57) **Abstract**

The invention relates to a computer-implemented method in a navigation satellite system, NSS, using an ionospheric model that models delays in signal propagation from a satellite to the surface of the earth, wherein the ionospheric model is based on ionosphere slant total electron content, TEC, observations from a plurality of network stations on the surface of the earth. The method is performed by an NSS rover and comprises: receiving, for a plurality of pairs of a network station and a satellite, a quality indicator, QI, value reflecting the quality of the ionospheric model; calculating, for each satellite, an interpolated QI value for the NSS rover; and determining the position of the NSS rover based on the interpolated QI values.

## Description

### [Field of technology]

The invention relates to methods, systems, devices, and computer programs for generating, transmitting, and using information related to atmospheric effects (especially caused by the ionosphere and the troposphere) in the context of (e.g., positioning) methods and systems making use of navigation satellite system (NSS) signals. The fields of application of the methods, systems, devices (including smartphones or other portable devices), and computer programs (including mobile applications) include, but are not limited to, geospatial positioning, navigation, highly automated driving, autonomous driving, mapmaking, land surveying, civil engineering, construction, agriculture, disaster prevention and relief, and scientific research.

### [Background]

Navigation satellite systems (NSS) include both global navigation satellite systems (GNSS) and regional navigation satellite systems (RNSS), such as the Global Positioning System (GPS) (United States), GLONASS (Russia), Galileo (Europe), BeiDou (China), QZSS (Japan), the Indian Regional Navigation Satellite System (IRNSS, also referred to as NavIC) (systems in use or in development), and are also intended to be inclusive of MEO-PNT and LEO-PNT navigation satellite systems.

An NSS typically uses a plurality of satellites orbiting the earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcast signal with a receiver-side version of the code to be detected. Based on the detection of the time of arrival of the code for each of a series of the satellites, the NSS receiver estimates its position. Positioning includes, but is not limited to, geolocation, i.e. the positioning on the surface of the earth.

An overview of GPS, GLONASS, and Galileo is provided for example in ref. [1], see especially sections 9, 10, and 11 (a list of references is provided at the end of the present description).

The main GNSS observables are the carrier phase and the code (pseudorange), the former being generally much more precise than the latter, but ambiguous. These observables enable a user to obtain the geometric distance from the receiver to the satellite. With known satellite position and satellite clock error, the receiver position and receiver clock error can be estimated. GNSS observation equations for code observations and for carrier phase observations are for instance provided in ref. [1], section 5.

Positioning using NSS signal codes provides a limited accuracy, notably due to the distortion the code is subject to upon transmission through the atmosphere, in particular due to ionospheric and tropospheric errors. Indeed, the propagation speed of a signal from an NSS satellite depends on the Total Electron Content (TEC) in the ionosphere along the signal path, which in turn depends on, for example, solar activity or the earth's magnetic field. Humidity (i.e. water vapor) also causes a variable delay, resulting in errors similar to ionospheric delay, but occurring in the troposphere. This effect is more localized than ionospheric effects, is smaller in magnitude and is not frequency-dependent.

A global network of NSS reference stations may be used to compute and provide correction information to NSS receivers (users) in the field. The correction information may for example comprise precise information about satellite orbits, satellite clocks, and ionosphere- and troposphere-induced signal delays. The correction information provided to the NSS receivers can allow the carrier phase ambiguity parameters to be constrained to its integer values to obtain a so-called "fixed" solution. These systems are known in the art as precise point positioning (PPP) or precise point positioning real-time kinematic (PPP-RTK) systems or services. For example, ref. [2] defines message types in support of RTK corrections, e.g. Message Types 1014-1017.

Recent advancements in ionospheric error correction techniques aim to improve the accuracy and reliability of GNSS-based positioning systems. For example, an ionospheric model has been developed for the Galileo satellite navigation system, to determine Galileo single-frequency ionospheric corrections, see ref. [3]. Another example is the EGNOS (European Geostationary Navigation Overlay Service) satellite-based augmentation system (SBAS) considering Grid Ionospheric Vertical Delays (GIVDs) to improve accuracy, and Grid Ionospheric Vertical Errors (GIVEs) to improve integrity, see ref. [4]. A further example is the GPS-based, variable degree adjusted spherical harmonic (ASHA) model developed for near real-time regional ionospheric TEC mapping, see ref. [5].

Furthermore, ref. [6] describes ionospheric and tropospheric corrections according to the LTE Positioning Protocol. Ref. [7] also describes ionospheric and tropospheric corrections.

There is a constant need for improving the implementation of positioning or similar systems making use of NSS observables, and, in particular, systems involving the transmission of correction information to NSS receivers and the like.

### [Summary]

Since the ionosphere can undergo sudden and strong variations due to solar activity and geomagnetic storms, high-resolution ionosphere models (e.g. vertical total electron content, VTEC, or slant total electron content, STEC) are required to improve the accuracy and the convergence time of the estimated NSS rover position. Similarly, the troposphere can undergo sudden changes as well due to weather phenomena.

One way to provide precise high-resolution ionosphere TEC information is to generate and broadcast irregular or regular grids of TEC values. In this context, there is a further need to determine a grid model quality indicator which is robust with respect to sudden changes in the grid point availability, allows for a proper weighting of ionospheric correction information in the GNSS positioning engine of the rover and may be used to derive dynamic integrity bounds. In addition, not only the determination of an accurate quality indicator at the grid points is desired, but providing a realistic quality estimate for the retrieved atmospheric delay of each satellite-specific model for an NSS rover (located in-between the grid points) can help mitigate further the risk of integrity fails, in particular in safety-critical applications, and to avoid harmful extrapolation of grid model values. The present invention aims to address these needs.

In a first embodiment, a computer-implemented method in a navigation satellite system, NSS, uses an ionospheric model that models delays in signal propagation from a satellite to the surface of the earth, wherein the ionospheric model is based on ionosphere slant total electron content, TEC, observations from a plurality of network stations on the surface of the earth. The method is performed by a NSS rover and comprises: receiving, for a plurality of pairs of a network station and a satellite, a quality indicator, QI, value reflecting the quality of the ionospheric model; calculating, for each satellite, an interpolated QI value for the NSS rover; and determining the position of the NSS rover based on the interpolated QI values.

In a second embodiment, a computer-implemented method in a navigation satellite system, NSS, uses a tropospheric model that models delays in signal propagation from a satellite to the surface of the earth, wherein the tropospheric model is based on troposphere delay observations from a plurality of network stations on the surface of the earth. The method is performed by a NSS rover and comprises: receiving, for a plurality of network stations, a quality indicator, QI, value reflecting the quality of the tropospheric model; calculating an interpolated QI value for the NSS rover; and determining the position of the NSS rover based on the interpolated QI value.

By transmitting a QI value for each pair of a network station and a satellite in case of the ionosphere or for each network station in case of the troposphere (compared to having only one QI value for the complete ionospheric/tropospheric model), it is possible to improve the convergence of the positioning at the NSS rover.

In another embodiment, a processing entity in a navigation satellite system, NSS, comprises means for carrying out the method of the first or second embodiment.

In another embodiment, a computer program comprises instructions which, when the program is executed by a computer, cause the computer to carry out the method of the first or second embodiment.

In another embodiment, a computer-readable storage medium comprises instructions which, when executed by a computer, cause the computer to carry out the method of the first or second embodiment.

### [Brief description of the drawings]

Embodiments of the present invention shall now be described in conjunction with the appended drawings in which:
Fig. 1a is a map showing the evaluated values of the polynomial coefficients part of the grid model in one embodiment of the invention.
Fig. 1b is a map showing the residual grid part of the grid model in one embodiment of the invention.
Fig. 1c is a map showing the grid quality indicator part of the grid model in one embodiment of the invention.
Fig. 2 is a schematic diagram illustrating some operations of a method for generating and sending QI values in one embodiment of the invention.
Fig. 3 is a diagram of a buffer structure in one embodiment of the invention.
Fig. 4 is an illustration of the method for calculating the validity radius in one embodiment of the invention.
Fig. 5a shows QI maps at different times and the QI for a specific station, without re-evaluation of the determined QI in one embodiment of the invention.
Fig. 5b shows QI maps at different times and the QI for a specific station, with re-evaluation of the determined QI in one embodiment of the invention.
Fig. 6a shows an example of a time series of the QI for a pair of a network station and a setting satellite without re-evaluation of the determined QI in one embodiment of the invention.
Fig. 6b shows an example of a time series of the QI for a pair of a network station and a setting satellite with re-evaluation of the determined QI in one embodiment of the invention.
Fig. 7a shows the decisive integrity value without re-evaluation of the determined QI in one embodiment of the invention.
Fig. 7b shows the decisive integrity value with re-evaluation of the determined QI in one embodiment of the invention.
Fig. 8a is a map of the interpolated ionosphere delay without the adaptive validity radius in one embodiment of the invention.
Fig. 8b is a map of the interpolated quality indicator (QI) without the adaptive validity radius in one embodiment of the invention.
Fig. 9a is a map of the interpolated ionosphere delay with the adaptive validity radius in one embodiment of the invention.
Fig. 9b is a map of the interpolated quality indicator (QI) with the adaptive validity radius in one embodiment of the invention.
Fig. 10 is an illustration for the method of centroid ratio (CR) determination in one embodiment of the invention using the previously determined validity radius (VR).
Fig. 11 is a centroid ratio weight (CRW) example plot in one embodiment of the invention.
Fig. 12a is a QI map before CR weighting in one embodiment of the invention.
Fig. 12b is a QI map after centroid ratio weighting in one embodiment of the invention.
Fig. 13 is a representation of the elevation-dependent factor used to reduce the predefined CRT in one embodiment of the invention.
Fig. 14 is a QI map after weighting and thresholding in one embodiment of the invention.
Fig. 15a shows plots of the QI and the decisive integrity values without CRW in one embodiment of the invention.
Fig. 15b shows plots of the QI and the decisive integrity values with CRW in one embodiment of the invention.
Fig. 15c shows plots of the QI and the decisive integrity values with CRT in one embodiment of the invention.
Fig. 16a shows plots of convergence without CRW in one embodiment of the invention.
Fig. 16b shows plots of convergence with CRW in one embodiment of the invention.
Fig. 16c shows plots of convergence with CRT in one embodiment of the invention.
Fig. 17a and 17b are flowcharts of methods for generating and sending QI values in one embodiment of the invention.
Fig. 18a and 18b are flowcharts of methods for receiving and processing QI values in one embodiment of the invention.
Fig. 19 is a flowchart of the QI re-evaluation method in one embodiment of the invention.
Fig. 20 is a functional block diagram of a network station in one embodiment of the invention.
Fig. 21 is a functional block diagram of a rover in one embodiment of the invention.

### [Detailed description]

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the following description, the abbreviation "GNSS" is sometimes used. The invention is, however, not limited to global navigation satellite systems (GNSS) but also applies to regional navigation satellite systems (RNSS) and regional satellite-based augmentation systems (SBAS). Thus, it is to be understood that each occurrence of "GNSS" in the following can be replaced with "RNSS" to form additional embodiments. In addition, as mentioned above in the "Background" section, the term "NSS" is here intended to cover different types of embodiments, and those may also include embodiments involving MEO-PNT and/or LEO-PNT navigation satellite systems.

In the following, we will first describe the operations of the network, especially how the network determines QI values that are transmitted to an NSS rover. Thereafter, we will describe how the NSS rover uses the received QI values. The determination and usage of the QI values will be described for both the ionosphere and the troposphere.

### OPERATIONS OF THE NETWORK

In the present disclosure, we describe Precise Point Positioning (PPP) corrections based on a set of network stations. Network stations (sometimes also called reference stations) for PPP corrections are part of a global, regional or local network used to enhance the accuracy of GNSS positioning. These stations continuously track all GNSS constellations and provide data to calculate precise satellite clocks and orbits, along with global and regional atmospheric models. Here, we focus on the atmospheric corrections, especially ionospheric and tropospheric corrections (see ref. [1], section 5.3 for an overview of atmospheric effects).

In the following, we describe a so-called "grid model approach" where a set of network stations covering at least a part of the surface of the earth is used to provide atmospheric corrections. More specifically, the grid model approach describes a station-based model, i.e., the grid points being defined on the basis of the station coordinates of the network stations contributing to the model. Therefore, the grid can be described as an irregular grid, where the coordinates of each grid point *Pₖ* refer to a reference latitude *φ*₀ and longitude *λ*₀, calculated consecutively as follows: ${φ}_{k} = {φ}_{k - 1} + {Δφ}_{k}$ ${λ}_{k} = {λ}_{k - 1} + {Δλ}_{k}$ where *Δφₖ* and *Δλₖ* are the coordinate differences w.r.t. the previous grid point, in latitude and longitude, of *k =* 1, 2, ..., *K* consecutive stations, with *K* the total number of grid points (network stations).

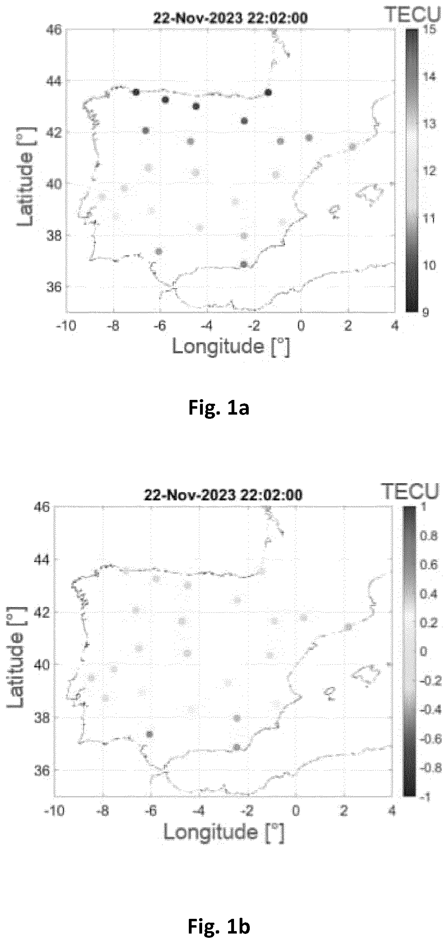

Fig. 1a shows an example of a regional grid comprising *K* = 23 network stations which cover the Iberian Peninsula and which are irregularly distributed.

Assuming unbiased and ambiguity-free ionosphere (slant or vertical) total electron content (TEC) observations ${y}_{k}^{s} \left({φ}_{k}, {λ}_{k}, {t}_{i}\right)$ given at time (epoch) *tᵢ* for every satellite *s* = 1, 2, 3, ... *S* in view individually, a grid generating instance (software) may transform the given observations into three parts forming the ionospheric model, namely:
1. a polynomial part: The polynomial function of degree n and m in latitude and longitude direction reads $f \left(φ, λ, t\right) = {\sum }_{i \leq n , j \leq m , i + j \leq max \left\{m, n\right\}} {P}_{i , j} \left(t\right) ⋅ {\left({φ}_{0}-φ\right)}^{i} ⋅ {\left({λ}_{0}-λ\right)}^{j} .$ Therein *φ*₀ and *λ*₀ are reference coordinates and ${φ}_{□}$ and ${λ}_{□}$ are the coordinates of interest. For instance, for n=m=2, there are 6 coefficients: P_{0,0} acting as an offset, P_{0,1} and P_{1,0} representing gradients, P_{1,1} as a diagonal term, and P_{0,2} and P_{2,0} as quadratic terms,
2. a residual part, providing the individual residuals defined as 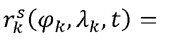 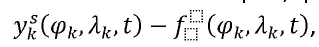 and
3. a quality indicating part (value) ${QI}_{k}^{s} \left({φ}_{k}, {λ}_{k}, t\right)$, reflecting the quality of the ionosphere model at the network station *k* for satellite *s*. The quality indicator is preferably a statistical measure to evaluate the performance of the ionospheric model such as a mean square error, a root mean square error or a mean absolute error.

While reconstructing the delay directly at a network station is almost error-free, providing the delay at the rover position is subject to an interpolation. Since the electron density may be distributed inhomogeneously, and may vary non-linearly from one to the next network station, interpolation errors can be expected. The magnitude of the interpolation error depends on the interpolation method, the distribution/geometry of the network stations contributing to the interpolation and the current physical electron density in the ionosphere.

Another source of error is temporal changes in the ionosphere, considering also the time delay between model generation and its application by the rover (due to data transmission). Therefore, the quality indicator should also account for the uncertainty/errors due to the time difference between the model generation and its application by the rover (receiver).

The same calculation can be performed for troposphere delay observations 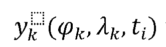 with the difference that the troposphere delay observations are not satellite-specific such that the index s for the satellite is dropped. More specifically, the residual part is 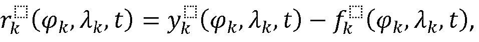 and the QI value is

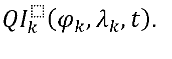

Examples for the polynomial part and the residual part are also given in sections 5.5.4 and 5.5.5 of ref. [7].

One advantage of splitting the ionospheric/tropospheric delay into a polynomial and a residual part is to compress the data and to allow the ionospheric delays to be transmitted to an NSS rover, *i.e*., an NSS receiver via data links/channels with limited bandwidth. The rover will, in the end, use the received polynomial and residual parts and reconstruct the full ionospheric/tropospheric delay at the network stations' locations and has to interpolate both to its own position.

It is important to note that the QI value ${QI}_{k}^{s}$ is not an overall value applicable to the complete ionospheric model but is specific to a pair of a network station *k* and a satellite *s*. The QI is meant to reflect the quality of the ionospheric delay provided by the model and the variability of the atmosphere at the network station *k.* Similarly, the QI value ${QI}_{k}^{□}$ for the troposphere is station-specific.

Importantly, the quality indicator should be characterized by at least one of the following features: (1) Quality due to the distribution geometry of the grid stations in the close vicinity, and (2) Quality due to the spatial and temporal variability of the ionosphere/troposphere within the modeling region.

The QI is necessary not only to determine the position, but also to indicate the integrity bounds of the provided correction. The QI value may be used as criteria to determine whether or not the correction value can be used in safety-critical applications of different level (e.g. by defining integrity bounds).

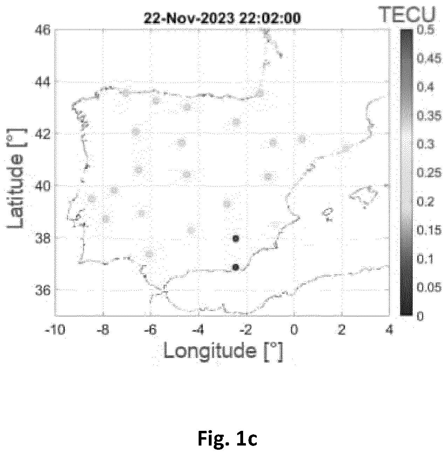

Figs. 1a, 1b, 1c show the components of the ionospheric grid model, *i.e*., respectively the polynomial part, the residual part, and the quality indication part. The horizontal axis represents longitude whereas the vertical axis represents latitude. Furthermore, the color code of the network stations represents the TEC observation in units of TECU (total electron content units).

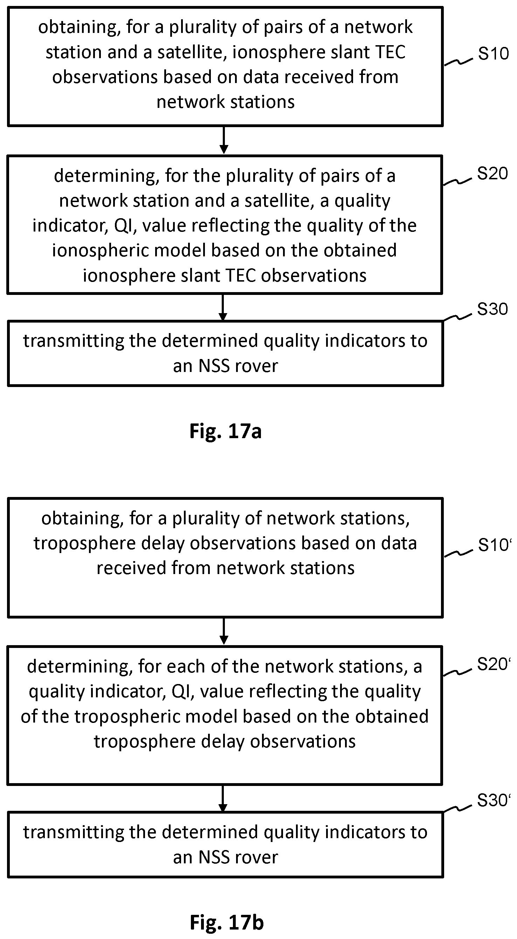

In one embodiment, as illustrated in Fig. 17a, a computer-implemented method in a NSS uses an ionospheric model that models delays in signal propagation from a satellite to a receiver on the surface of the earth. The ionospheric model is based on ionosphere slant TEC observations from a plurality of network stations on the surface of the earth. Fig. 17b shows a computer-implemented method in an NSS using a tropospheric model that models delays in signal propagation from a satellite to a receiver on the surface of the earth. The tropospheric model is based on troposphere delay observations from a plurality of network stations on the surface of the earth.

The methods illustrated in Fig. 17 may be carried out by one or a plurality of computers and/or servers, or more generally by any number of processing entities implemented in hardware, firmware, software, and/or using any form of machine-readable instructions. In one embodiment, the method is carried out partially or entirely in the cloud, i.e. by any number of processing entities in the cloud. The processing entities can at least partially be implemented in one or more of the network stations.

The method steps in Figs. 17a and 17b are performed at regular time intervals. In other words, the process is performed periodically. A regular time interval can also be called an epoch. An example of a regular time interval is 30 s.

In step S10, ionosphere TEC observations are obtained, for a plurality of pairs of a network station and a satellite, based on data received from network stations. In step S10', troposphere delay observations are obtained, for a plurality of network stations, based on data received from network stations.

The data received from network stations can be raw or pre-processed data in which case the TEC observations need to be calculated. Alternatively, the data received from network stations can be identical to the TEC observations.

The network stations in the plurality of pairs of a network station and a satellite are preferably located in a target region on the surface of the earth. The target region can be, for example, one or more cities, one or more countries, one or more continents or the whole earth.

An example of the ionosphere TEC observations is the above-mentioned ${y}_{k}^{s} \left({φ}_{k}, {λ}_{k}, {t}_{i}\right)$. The QI value ${QI}_{k}^{s}$ is specific to a pair of a network station *k* and a satellite s and is transmitted to the NSS rover, preferably together with the polynomial coefficients and the residual part.

The steps S10 and S10' of obtaining observations can be implemented by receiving the observations from network stations. Alternatively or in combination, the observations can be stored in a data storage and obtained by reading from the storage.

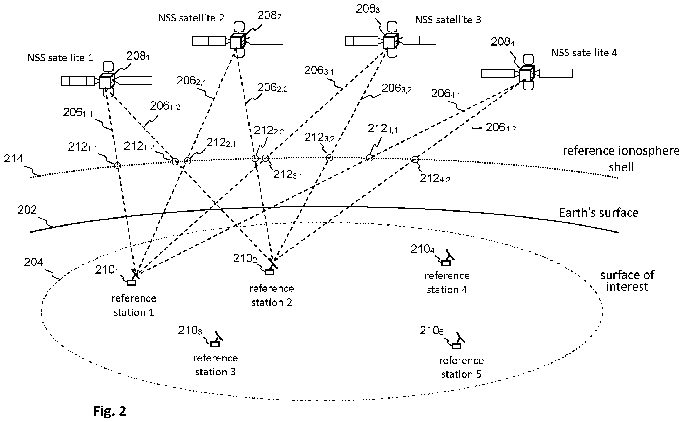

Fig. 2 illustrates the concept of ionosphere TEC observations for a pair of a network station and a satellite. The term "pair" refers to a link between a network station and a satellite. A satellite-station link 206 is a link between an NSS satellite 208 and a point 210. A point 210 is here also referred to as "network station" 210 or "reference station" 210, and is located on or near the surface of the earth. By "link", it is here meant a path that a radio frequency signal may potentially take from an NSS satellite 208 to a reference station 210. By "on or near the surface of the earth", it is here meant that a network station 210 may be on the surface of the earth or somewhere between the surface of the earth and the satellite. That is, a network station 210 needs not be precisely on the surface of the earth but may for example be attached to or arranged on a structure itself located on the surface of the earth.

The network stations 210 may form a network of network stations 210, and one reference station 210 may act as central processing entity. Alternatively, the network of network stations 210 may be communicably connected to a central processing entity, such as a central processing server. In other words, the processing entity or entities configured for carrying out the method (as referred to above) is (or are) hosted in one of the network stations 210 or, alternatively, the processing entity or entities configured for carrying out the method is (or are) communicably connected to the network stations 210.

This is further schematically illustrated in Fig. 2, which depicts, as an example, four NSS satellites 208₁, 208₂, 208₃, 208₄ (also labelled NSS satellites 1 to 4 in Fig. 2), and five stations 210₁, 210₂, 210₃, 210₄, 210₅ (also labelled reference stations 1 to 5 in Fig. 2). The five stations 210 are located on or near the earth's surface 202, and may be located within the surface of interest (target region) 204, although some stations 210 may also be located outside the surface of interest 204 (not illustrated in Fig. 2). The surface of interest 204 is at least a part of the earth's surface 202, i.e. either a part of the earth's surface (the target region, e.g. the Iberian Peninsula in Fig. 1) or the entire earth's surface. In the example of Fig. 2, all four satellites 208 are visible from each of the five stations 210 (this is not essential, however; i.e., in some embodiments, not all satellites 208 may be visible from all stations 210). Thus, 20 satellite-station links 206 are formed. To avoid overloading the diagram, only 8 satellite-station links 206_{1,1}, 206_{1,2}, 206_{2,1}, 206_{2,2}, 206_{3,1}, 206_{3,2}, 206_{4,1}, 206_{4,2}, are depicted in Fig. 2. The skilled person will recognize how to form the other satellite-station links.

In step S20, for the plurality of pairs of a network station and a satellite, a quality indicator, QI, value reflecting the quality of the ionospheric model is determined based on the obtained ionosphere TEC observations.

For example, the above-described QI value ${QI}_{k}^{s}$ is determined based on the ionosphere TEC observations ${y}_{k}^{s}$. As explained above, the quality indicator is preferably a statistical measure to evaluate the performance of the ionospheric model such as a mean square error, a root mean square error or a mean absolute error.

In step S20', for each of the network stations, a QI value reflecting the quality of the tropospheric model is determined based on the obtained troposphere delay observations.

For example, the above-described QI value ${QI}_{k}^{□}$ is determined based on the troposphere delay observations ${y}_{k}^{□}$. As explained above, the quality indicator is preferably a statistical measure to evaluate the performance of the tropospheric model such as a mean square error, a root mean square error or a mean absolute error.

In steps S30 and S30', the determined quality indicators are transmitted to an NSS rover. The steps S30 and S30' of transmitting the QI values to the NSS rover can involve sending, broadcasting or otherwise making available the QI values to the NSS rover. The QI values can be transmitted via one or more (e.g. geo-stationary) satellites and/or a mobile communication system (e.g. LTE and/or 5G).

In another embodiment, in step S20, the determining of the QI value for a first pair of a first network station and a first satellite comprises selecting the *N* network stations closest to the first network station, *N* being an integer greater than 1. Then, a first interpolated value of the ionosphere TEC observations of the selected *N* network stations is calculated for the first satellite. A preliminary QI value of the first pair is obtained based on a comparison of the first interpolated value with the ionosphere TEC observation of the first pair. Finally, the QI value for the first pair is determined based on the preliminary QI value. If all *N* network stations have a value for the current time interval, the QI value of the first pair is preferably the preliminary QI.

Thus, for the first pair of a first network station and a first satellite (i.e. the pair for which the preliminary QI is determined), *N* network stations are selected. *N* can be any integer greater than 1. For example, *N* can be six. These *N* network stations are the ones closest to the first network station. By "closest", it is here meant that the distances on the surface of the earth from the first network station to the *N* network stations are the smallest among the network stations within the target region.

The first interpolated TEC value ${I}_{k}^{s} \left({φ}_{k}, {λ}_{k}, {t}_{i}\right)$ is then calculated from the ionosphere TEC observations of the selected *N* network stations for the first network station with index *k* and the first satellite with index s.

This method can be called a Take-One-Out method because the first interpolated value is calculated based on the ionosphere TEC observations of the *N* network stations closest to the first network station, but not based on the ionosphere TEC observation of the first network station itself.

In one embodiment, the first interpolated value ${I}_{k}^{s} \left({φ}_{k}, {λ}_{k}, {t}_{i}\right)$ may be calculated as a weighted mean value of or a polynomial fit to the ionosphere TEC observations of the selected *N* network stations for the first satellite based on distance between the first network station and the selected *N* network stations.

For example, the interpolation may be weighted with the inverse of the squared distance between the first network station and the selected network station. Thus, for example, the weighted mean value is ${I}_{k}^{s} \left({φ}_{k}, {λ}_{k}, {t}_{i}\right) = \frac{{\sum }_{j = 1 … N}^{□} □ \frac{{y}_{j}^{s} \left({φ}_{j}, {λ}_{j}, {t}_{i}\right)}{{d}_{j}^{2}}}{{\sum }_{j = 1 … N}^{□} □ \frac{1}{{d}_{j}^{2}}}$, where *dⱼ* is the distance from the first network station to the network station with index *j*. Note that the weighting by the square distance is just an example and the weighting can be done with any power of the distance.

The preliminary QI is then obtained based on a comparison of the first interpolated value ${I}_{k}^{s} \left({φ}_{k}, {λ}_{k}, {t}_{i}\right)$ with the ionosphere TEC observation of the first pair ${y}_{k}^{s} \left({φ}_{k}, {λ}_{k}, {t}_{i}\right)$.

In one example, the preliminary QI, *prelQI,* can be calculated by subtraction as follows: ${prelQI}_{k}^{s} \left({φ}_{k}, {λ}_{k}, {t}_{i}\right) = abs \left({I}_{k}^{s}\left({φ}_{k}, {λ}_{k}, {t}_{i}\right)-{y}_{k}^{s}\left({φ}_{k}, {λ}_{k}, {t}_{i}\right)\right)$

However, the comparison is not limited to a simple subtraction. The comparison can also be performed by subtraction or by division and taking the absolute value of the difference or the ratio, respectively.

The QI value is then determined for the first pair based on the preliminary QI *prelQI.* In one embodiment, the preliminary QI *prelQI* is simply taken as the QI value, i.e. ${QI}_{k}^{s} =$ ${prelQI}_{k}^{s}$. In another embodiment, the preliminary QI *prelQI* is further processed of which examples are given in the following.

In another embodiment, in step S20', the determining of the QI value for a first network station comprises selecting the *N* network stations closest to the first network station, *N* being an integer greater than 1. Then a first interpolated value of the troposphere delay observations of the selected *N* network stations is calculated. A preliminary QI value of the first network station is obtained based on a comparison of the first interpolated value with the troposphere delay observation of the first network station. Finally, the QI value for the first network station is determined based on the preliminary QI value.

This step is performed in the same way as for the ionosphere except that the first interpolated value ${I}_{k}^{□} \left({φ}_{k}, {λ}_{k}, {t}_{i}\right)$ is not satellite-specific such that the preliminary QI ${prelQI}_{k}^{□} \left({φ}_{k}, {λ}_{k}, {t}_{i}\right)$ is also not satellite-specific.

In another embodiment, the method may further comprise storing, for each of the plurality of pairs of a network station and a satellite and for each time interval, the obtained ionosphere TEC observation and a QI value in a buffer.

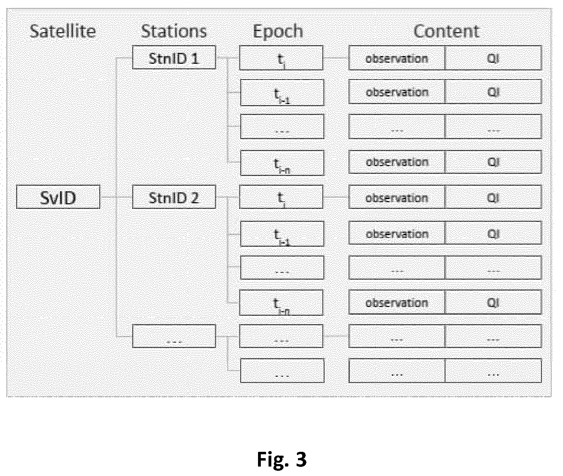

The buffer may have a nested structure, as shown in Fig. 3, and may contain the observation of past time intervals (epochs) for each pair (link) up to a certain time interval. More specifically, for a pair of a satellite SvID (corresponding to the index *k* above) and a station StnID (corresponding to the index *s* above) at a time interval t-dt (corresponding to the index *tᵢ* above), the buffer stores an ionosphere TEC observation ${y}_{k}^{s} \left({φ}_{k}, {λ}_{k}, {t}_{i}\right)$ and a QI value ${QI}_{k}^{s} \left({φ}_{k}, {λ}_{k}, {t}_{i}\right)$. In other words, the buffer provides triplets of observations ${y}_{k}^{s}$, quality indicators ${QI}_{k}^{s}$ and time *tᵢ* for each station-satellite pair, or "link".

The observations and QI values may be deleted from the buffer after a certain time, for example, 5 minutes.

When the buffer is initialized (e.g. when the method is started), the QI values can be set to a default value (e.g. -1) which indicates that the corresponding observation is invalid.

A similar buffer structure may be used for the troposphere with the difference that the obtained troposphere delay observation and a QI value are stored for each network station and for each time interval (not depending on a satellite).

In another embodiment, if, among the selected *N* network stations, there is a second network station for which an ionosphere TEC observation for the first satellite is stored in the buffer for a preceding time interval and for which there is no ionosphere TEC observation for the first satellite stored in the buffer for the current time interval, the determining of the QI value for the first pair at the current time interval comprises selecting the largest of the preliminary QI value of the first pair obtained at the current time interval and a QI value of the first pair stored in the buffer for the preceding time interval.

In other words, this embodiment covers the case that, among the *N* network stations closest to the first network station, there is a (second) network station for which there is no observation for the current time interval *tᵢ*. In this case, the second network station with index *k'* does not contribute to the calculation of the preliminary QI ${prelQI}_{k}^{s} \left({φ}_{k}, {λ}_{k}, {t}_{i}\right)$.

In this case, using the above notation, observations at the preceding time interval *t*_{*i*-1} and the current time interval *tᵢ* are compared. More specifically, the previous QI given by the buffer for the time interval *t*_{*i*-1}, noted ${QI}_{k}^{s} \left({φ}_{k}, {λ}_{k}, {t}_{i - 1}\right)$, and the preliminary QI ${prelQI}_{k}^{s} \left({φ}_{k}, {λ}_{k}, {t}_{i}\right)$ are compared: the largest of the two values determines the QI value for the first pair (the first network station with index *k* and the first satellite with index s). It should be noted that the directly preceding time interval *t*_{*i*-1} is just an example and any preceding time interval *t*_{*i*-*n*} with *n* > 1 can be used.

Of note, reasons for the second network station not providing observations (i.e. being invalid) could, e.g., be data transmission problems such as data outages or delays, or data (pre-) processing (e.g. ambiguity solving) issues. Since the QI value represents an error, using the largest of the two values helps avoiding an underestimation of the error. In this manner, even in case of a failure or malfunction of a network station, a QI value is obtained even if there is no observation at this particular station.

The same applies to the tropospheric case: if among the selected *N* network stations, there is a second network station for which a troposphere delay observation is stored in the buffer for a preceding time interval and for which there is no troposphere delay observation stored in the buffer for the current time interval, the determining of the QI value for the first network station at the current time interval comprises selecting the largest of the preliminary QI value of the first network station obtained at the current time interval and a QI value of the first network station stored in the buffer for the preceding time interval.

In this case, the second network station with index *k'* does not contribute to the calculation of the preliminary QI ${prelQI}_{k}^{□} \left({φ}_{k}, {λ}_{k}, {t}_{i}\right)$. Therefore, the previous QI given by the buffer for the time interval *t*_{*i*-1}, noted ${QI}_{k}^{□} \left({φ}_{k}, {λ}_{k}, {t}_{i - 1}\right)$, and the preliminary QI ${prelQI}_{k}^{□} \left({φ}_{k}, {λ}_{k}, {t}_{i}\right)$ are compared: the largest of the two values determines the QI value for the first network station with index *k*. It should be noted that the directly preceding time interval *t*_{*i*-1} is just an example and any preceding time interval *t*_{*i*-*n*} with *n* > 1 can be used.

In another embodiment, if, among the selected *N* network stations, there is a second network station for which an ionosphere TEC observation for the first satellite is stored in the buffer for a preceding time interval and for which there is no ionosphere TEC observation for the first satellite stored in the buffer for the current time interval, the method may further comprise: calculating a second interpolated value based on the ionosphere TEC observation of the second network station stored in the buffer for the preceding time interval and based on the ionosphere TEC observations of the selected *N* network stations, without the second network station, stored in the buffer for the current time interval; and obtaining an alternative QI value of the first pair based on a comparison of the second interpolated value with the ionosphere TEC observation of the first network station for the current time interval.

Again, this embodiment covers the case that, among the *N* network stations closest to the first network station, there is a (second) network station for which there is no observation for the current time interval *tᵢ*. In this case, the second network station with index *k'* does not contribute to the calculation of the preliminary QI ${prelQI}_{k}^{s} \left({φ}_{k}, {λ}_{k}, {t}_{i}\right)$.

In this case, an alternative QI value ${altQI}_{k}^{s} \left({φ}_{k}, {λ}_{k}, {t}_{i}\right)$ is determined in a similar manner as the preliminary QI, i.e., by interpolation using the observations from the, as an example, *N* = 6 closest stations: the difference, however, is that the (previous) observation ${y}_{k ′}^{s} \left({φ}_{k ′}, {λ}_{k ′}, {t}_{i - 1}\right)$ is used for the second network station. For the other remaining network stations, the observations at the current time interval *tᵢ* are used.

For example, the interpolation may be weighted with the inverse of the squared distance between the first network station and the selected network station. For example, if there is one outdated observation ${y}_{k ′}^{s} \left({φ}_{k ′}, {λ}_{k ′}, {t}_{i - 1}\right)$, the weighted mean value is ${I}_{k}^{′ s} \left({φ}_{k}, {λ}_{k}, t\right) = \frac{\frac{{y}_{k ′}^{s} \left({φ}_{k ′}, {λ}_{k ′}, {t}_{i - 1}\right)}{{d}_{k ′}^{2}}}{\frac{1}{{d}_{k ′}^{2}}} + \frac{{\sum }_{j = 1}^{j \leq N - 1} \frac{{y}_{j}^{s} \left({φ}_{j}, {λ}_{j}, {t}_{i}\right)}{{d}_{j}^{2}}}{{\sum }_{j = 1}^{j \leq N - 1} \frac{1}{{d}_{j}^{2}}}$

If there are K > 1 outdated observations with *K* ≤ *N*, the weighted mean value is ${I}_{k}^{′ s} \left({φ}_{k}, {λ}_{k}, t\right) = \frac{{\sum }_{k ′ = 1}^{k ′ \leq K} \frac{{y}_{k ′}^{s} \left({φ}_{k ′}, {λ}_{k ′}, {t}_{i - 1}\right)}{{d}_{k ′}^{2}}}{{\sum }_{k ′ = 1}^{k ′ \leq K} \frac{1}{{d}_{k ′}^{2}}} + \frac{{\sum }_{j = 1}^{j \leq N - K} \frac{{y}_{j}^{s} \left({φ}_{j}, {λ}_{j}, {t}_{i}\right)}{{d}_{j}^{2}}}{{\sum }_{j = 1}^{j \leq N - K} \frac{1}{{d}_{j}^{2}}}$ where *dⱼ* is the distance from the first network station to the network station with index*j*.

The alternative QI value is then obtained based on a comparison of the second interpolated value $I {′}_{k}^{s} \left({φ}_{k}, {λ}_{k}, {t}_{i}\right)$ with the ionosphere TEC observation of the first pair ${y}_{k}^{s} \left({φ}_{k}, {λ}_{k}, {t}_{i}\right)$.

In one example, the alternative QI value, alt*QI*, can be calculated by subtraction as follows: ${altQI}_{k}^{s} \left({φ}_{k}, {λ}_{k}, {t}_{i}\right) = abs \left(I{′}_{k}^{s}\left({φ}_{k}, {λ}_{k}, {t}_{i}\right)-{y}_{k}^{s}\left({φ}_{k}, {λ}_{k}, {t}_{i}\right)\right)$

However, the comparison is not limited to a simple subtraction. The comparison can also be performed by subtraction or by division and taking the absolute value of the difference or the ratio, respectively.

The same applies to the tropospheric case: if, among the selected *N* network stations, there is a second network station for which a troposphere delay observation is stored in the buffer for a preceding time interval and for which there is no troposphere delay observation stored in the buffer for the current time interval, the method may further comprise: calculating a second interpolated value based on the troposphere delay observation of the second network station stored in the buffer for the preceding time interval and based on the troposphere delay observations of the selected *N* network stations, without the second network station, stored in the buffer for the current time interval; and obtaining an alternative QI value of the first network station based on a comparison of the second interpolated value with the troposphere delay observation of the first network station for the current time interval.

In this case, the second network station with index *k'* does not contribute to the calculation of the preliminary QI ${prelQI}_{k}^{□} \left({φ}_{k}, {λ}_{k}, {t}_{i}\right)$. Therefore, a second interpolated value can be calculated using the observation ${y}_{k ′}^{□}$ at a previous time interval *t*_{*i*-1} together with the observations of all other stations at the current time to obtain the alternative QI ${altQI}_{k}^{□} \left({φ}_{k}, {λ}_{k}, {t}_{i}\right) = abs \left(I{′}_{k}^{□}\left({φ}_{k}, {λ}_{k}, {t}_{i}\right)-{y}_{k}^{□}\left({φ}_{k}, {λ}_{k}, {t}_{i}\right)\right)$.

In another embodiment, in the case that, among the *N* network stations closest to the first network station, there is a (second) network station for which there is no observation for the current time interval *tᵢ*, the determining of the QI value for the first pair at a current time interval may comprise selecting the largest of the preliminary QI value of the first pair obtained at the current time interval, a QI value stored in the buffer for the preceding time interval, and the alternative QI value of the first pair obtained from a combination of observations ${y}_{k}^{□}$ and observations ${y}_{k ′}^{□}$ of preceding time intervals.

In other words, the three values ${QI}_{k}^{s} \left({φ}_{k}, {λ}_{k}, {t}_{i - 1}\right) , {prelQI}_{k}^{s} \left({φ}_{k}, {λ}_{k}, {t}_{i}\right)$ and ${altQI}_{k}^{s} \left({φ}_{k}, {λ}_{k}, {t}_{i}\right)$ for the ionosphere case and/or the three values ${QI}_{k}^{□} \left({φ}_{k}, {λ}_{k}, {t}_{i - 1}\right)$, ${prelQI}_{k}^{□} \left({φ}_{k}, {λ}_{k}, {t}_{i}\right)$ and ${altQI}_{k}^{□} \left({φ}_{k}, {λ}_{k}, {t}_{i}\right)$ for the troposphere case may be compared, and the largest numerical value is selected as the (final) QI value that is output to the NSS rover. Furthermore, the buffer is updated with the final QI value, i.e. the final QI value is stored in the buffer for the first network station with index *k*, for the current time interval *tᵢ* (and for the first satellite with index s in the ionosphere case).

This procedure can be considered as a re-evaluation of the preliminary QI ${prelQI}_{k}^{s} \left({φ}_{k}, {λ}_{k}, {t}_{i}\right) / {prelQI}_{k}^{□} \left({φ}_{k}, {λ}_{k}, {t}_{i}\right)$ in case of the non-availability of observations at the current time interval *tᵢ*.

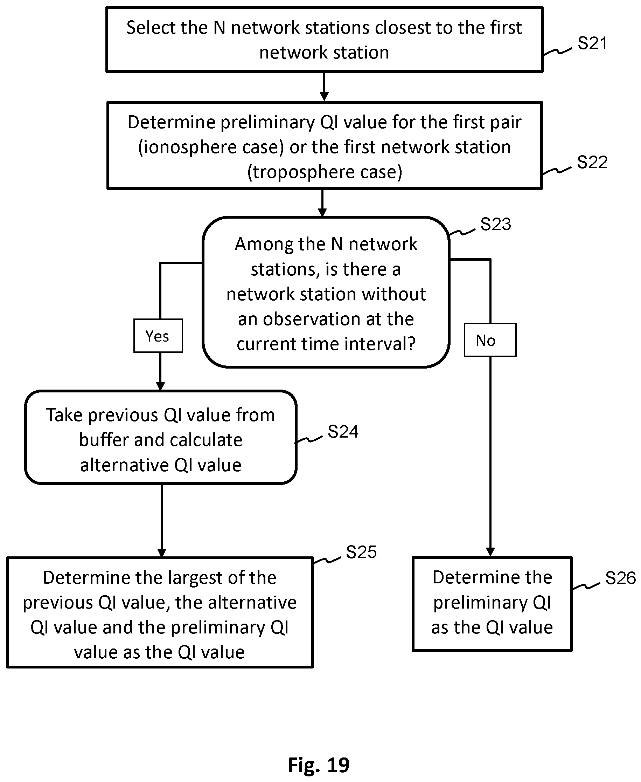

Fig. 19 shows a diagram recapitulating the re-evaluation method which is part of the step of determining the QI value in step S20. More specifically, the figure shows how the (final) QI value for the first network station with index *k*, for the first satellite with index s and for the current time interval *tᵢ* is determined.

In step S21, the *N* network stations closest to the first network station are selected. In step S22, the preliminary QI value ${prelQI}_{k}^{s} \left({φ}_{k}, {λ}_{k}, {t}_{i}\right) / {prelQI}_{k}^{□} \left({φ}_{k}, {λ}_{k}, {t}_{i}\right)$ is determined. In step S23, it is determined if among the N network stations, there is a (second) network station for which there is no observation for the current time interval *tᵢ*. If there is such a second network station, in step S24, the previous QI value ${QI}_{k}^{s} \left({φ}_{k}, {λ}_{k}, {t}_{i - 1}\right) / {QI}_{k}^{□} \left({φ}_{k}, {λ}_{k}, {t}_{i - 1}\right)$ is taken from the buffer and the alternative QI value ${altQI}_{k}^{s} \left({φ}_{k}, {λ}_{k}, {t}_{i}\right) / {altQI}_{k}^{□} \left({φ}_{k}, {λ}_{k}, {t}_{i}\right)$ is calculated. In step S25, the three values ${QI}_{k}^{s} \left({φ}_{k}, {λ}_{k}, {t}_{i - 1}\right) , {prelQI}_{k}^{s} \left({φ}_{k}, {λ}_{k}, {t}_{i}\right)$ and ${altQI}_{k}^{s} \left({φ}_{k}, {λ}_{k}, {t}_{i}\right)$ for the ionosphere case (or ${QI}_{k}^{□} \left({φ}_{k}, {λ}_{k}, {t}_{i - 1}\right) , {prelQI}_{k}^{□} \left({φ}_{k}, {λ}_{k}, {t}_{i}\right)$ and ${altQI}_{k}^{□} \left({φ}_{k}, {λ}_{k}, {t}_{i}\right)$ for the troposphere case) are compared, and the largest numerical value is selected as the (final) QI value that is output to the NSS rover in step S30 or S30'. If, on the other hand, there is no second network station without an observation for the current time interval, in step S26, the preliminary QI value ${prelQI}_{k}^{s} \left({φ}_{k}, {λ}_{k}, {t}_{i}\right) / {prelQI}_{k}^{□} \left({φ}_{k}, {λ}_{k}, {t}_{i}\right)$ is determined as the (final) QI value that is output to the NSS rover.

In another embodiment, the selecting of the *N* network stations may be performed within a validity radius around the first network station, and the method may further comprise transmitting the validity radius to the NSS rover.

In other words, the *N* network stations need to be located within the validity radius around the first network station. If there are less than *N* (e.g. *M* < *N*) network stations within the validity radius, the method will only select the *M* network stations.

The validity radius may help to restrict the area to perform interpolation, thus increasing the calculation accuracy and limiting the extrapolation beyond the boundary of the reference station network. In fact, using network stations that are very far away from the rover location would lead to a less accurate interpolation.

In another embodiment, the validity radius VR may be calculated by: selecting an area on the surface of the earth; obtaining, for each of the network stations in the area, the distance to the closest network station; calculating an average of the obtained distances for the network stations in the area; and calculating the validity radius by multiplying the calculated average by a predefined factor.

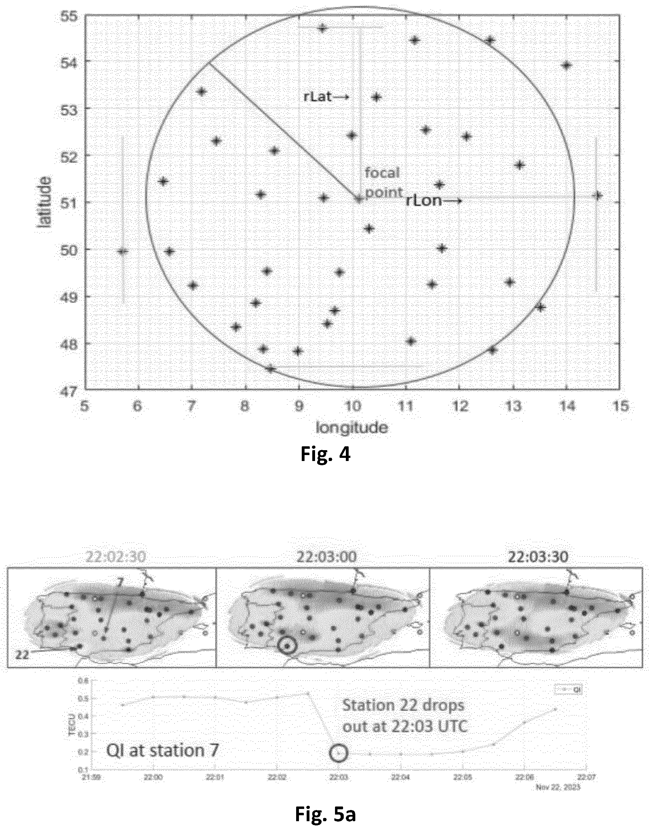

Fig. 4 shows an illustration for the determination of the validity radius VR. The area on the surface of the earth can, for example, be the above-mentioned target region. Alternatively, the area on the surface can be, for example, one or more countries, one or more continents or the whole earth. The stars represent the location of the network stations on the surface of the earth.

In a first optional step, the focal point (e.g. the center of gravity) of the network stations in the area is determined. Then, the distance/difference in latitude *rLat* from the focal point to the network station that is the farthest away from the focal point in latitude direction is determined. Similarly, the distance/difference in longitude *rLon* from the focal point to the network station that is the farthest away from the focal point in longitude direction is determined. After that, a mean region size *rMean* is determined: $rMean = \frac{\left(rLat+rLon\right)}{2} .$ In the present example, *rMean* = 4.0318° ≈ 447.53 *km.*

Then, within the radius *rMean* around the focal point, the mean station spacing is derived, by calculating (planar) distances - considering the meridian convergence - from one network station to all other network stations, finding for each network station the distance to the closest network station (i.e., the smallest distance), and averaging for all stations the smallest distances, and obtaining the corresponding quantity *sampMean.* Optionally, 30% of the shortest distances can be neglected for the averaging. The averaging can be performed by calculating an arithmetic average, a median etc.

The validity radius may then be calculated by multiplying *sampMean* with a factor *f* which is a positive real number: $VR = f \times sampMean$ Preferably, *f* > 1 to ensure that there is a sufficient number of network stations within the validity radius. The inventors realized that *f* = 3 yields good results in practice because this choice ensures that there are typically at least 3 network stations, but maximal 6 network stations within the validity radius.

The advantages of the above-described re-evaluation of the (preliminary) QI value will now be described for the ionosphere case.

As a comparative example, Fig. 5a shows three maps of the QI for a setting satellite. The map corresponds to the example in Fig. 1, i.e. the colouring illustrates the interpolated QI value in TECU. At 22:03:00 UT, station 22 becomes invalid (marked with a circle on the second map). The lower graph shows the time series of the QI value, determined for station 7 without applying the QI re-evaluation. At 22:03:00 UT there is a drop in the QI, only due to the fact that one of the closest six stations (station 22) of station 7 drops out.

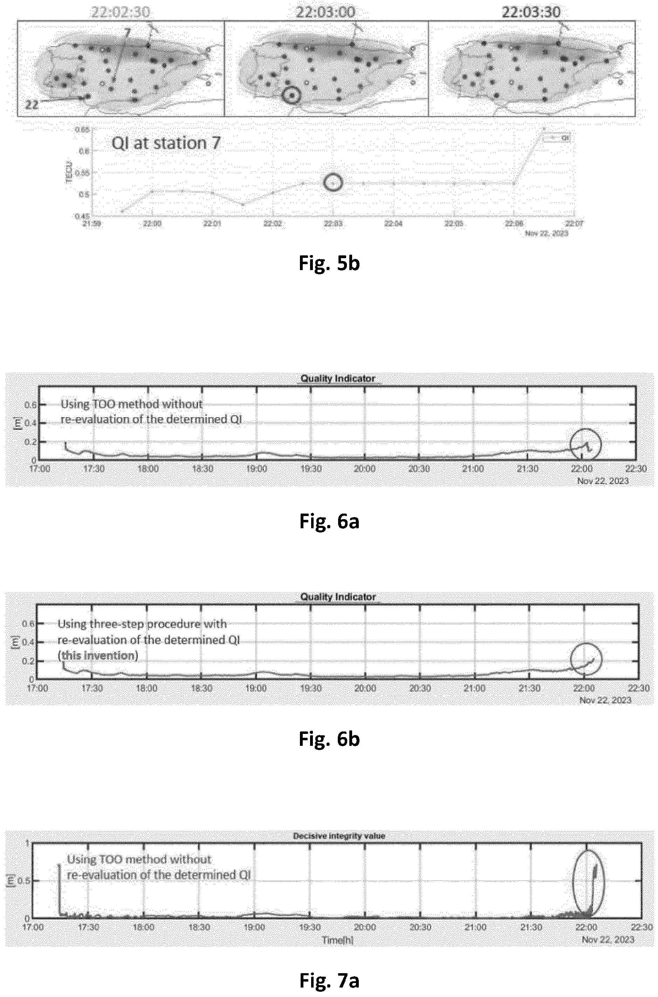

Fig. 5b shows that by applying the above-described re-evaluation method (see fig. 19), the alternative QI value is chosen (instead of the preliminary QI). This is because it has the largest value, since the dropped-out station still contributes with ${y}_{k}^{s} \left({φ}_{k}, {λ}_{k}, {t}_{i - 1}\right)$ to its calculation. As a consequence, the QI value stays stable and does not show a drop despite the fact that station 22 drops out.

Fig. 6a and 6b further demonstrate the benefits of the re-evaluation method in the scenario of Fig. 5. Fig. 6a shows a comparative example where the horizontal axis represents time and the vertical axis represents the QI value in meters at an independent so-called integrity station. Note, the purpose of working with integrity stations is described in the following. In line with fig. 5a, at 22:03:00 UT there is a drop in the QI, only due to the fact that one of the closest six stations (station 22) contributing to the QI computation drops out.

Fig. 6b shows that by applying the above-described re-evaluation method, the QI value remains stable. That is, in comparison with Fig. 6a, Fig. 6b shows no drop of the QI value after 22:00, as indicated by the circle in both plots

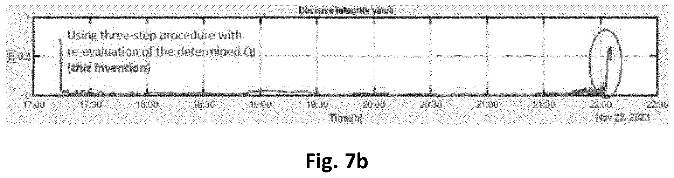

Fig. 7a and 7b show a decisive integrity value (= abs(residual) - QI value) at an integrity station. Decisive integrity values are determined for individual integrity stations using the provided model. Thereby the integrity station acts like a rover. It is used to determine integrity information for a satellite-specific model by means of the integrity criterion abs(residual) - QI < 1 m, with residuals, calculated as the difference between the model delay and the actual delay at the integrity station. In other words, the decisive integrity values are calculated at an integrity station which monitors the integrity of the (satellite-specific) ionospheric models. If the decisive integrity value becomes larger than a threshold value (e.g. 1 m), the ionospheric model is marked as not reliable which is communicated to the NSS rover. The NSS rover may then decide not to use the ionospheric model for safety reasons (e.g. not using the ionospheric model for positioning of machines potentially dangerous for humans).

More specifically, Fig. 7a and 7b highlight the impact of the re-evaluation of the QI value on decisive integrity values, corresponding to abs(residual) - QI in the depicted situation. As shown in Fig. 7b compared to Fig. 7a, the new QI obtained through the re-evaluation procedure reflects the actual residual, i.e. error, better.

In another embodiment, a processing entity in an NSS may comprise means for carrying out the method of any one of the previous embodiments.

The processing entity is capable of receiving and processing data, and may be for example an NSS receiver, or, as another example, an NSS receiver and another processing entity.

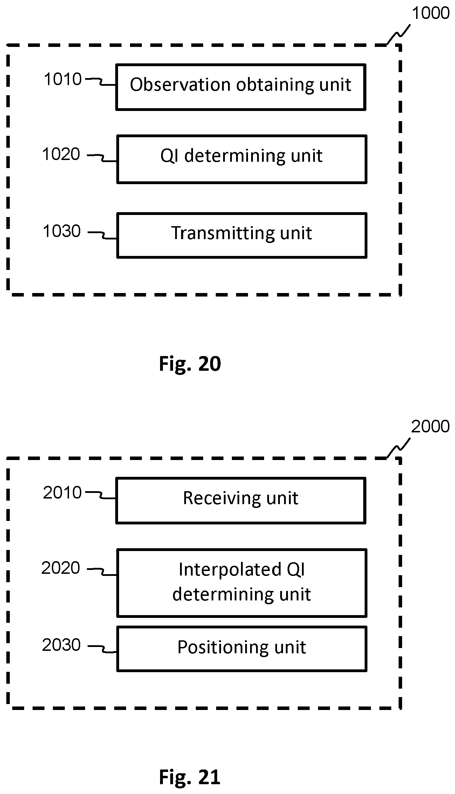

Fig. 20 shows an embodiment of the processing entity 1000. Processing entity 1000 comprises one or a plurality of computers and/or servers, or more generally any number of processing entities implemented in hardware, firmware, software and/or using any form of machine-readable instructions. Part of the processing entity 1000 may also encompass an NSS receiver and/or a processing entity capable of receiving data from the NSS receiver. The processing entity 1000 comprises an observation obtaining unit 1010 adapted to perform step S10/S10' above, a QI determining unit 1020 adapted to perform step S20/S20' above (see also fig. 17) and a transmitting unit 1030 adapted to perform step S30/S30' above.

In another embodiment, a computer program may comprise instructions which, when the program is executed by a computer, cause the computer to carry out the method of any one of the previous embodiments.

The computer program may be loaded on an apparatus or device, such as for example a server (which may comprise one or a plurality of computers), an NSS receiver (running on a rover station, on a reference station, or within a vehicle) and/or an NSS receiver chipset for mobile phones or automotive applications. Therefore, the invention also relates, in some embodiments and/or aspects, to a computer program or set of computer programs, which, when carried out on an apparatus as described above, such as for example an NSS receiver (running on a rover station, on a reference station, or within a vehicle) or a server, carries out any one of the above-described methods and their embodiments.

In another embodiment, a computer-readable storage medium may comprise instructions which, when executed by a computer, cause the computer to carry out the method of any one of the previous embodiments.

The computer-readable storage medium may for instance be a magnetic tape, an optical memory disk, a magnetic disk, a magneto-optical disk, an SSD, a CD-ROM, a DVD, a CD, a flash memory unit, or the like, wherein the computer program is permanently or temporarily stored. In some embodiments, a computer-readable storage medium has computer-executable instructions for carrying out any one of the methods of the invention.

In summary, the present invention provides the following advantages.

The invention allows for determining a quality indicator for the so-called grid model which is suitable to optimize the noise modelling in the positioning engine and to fulfil integrity needs, which is of particular importance in safety-critical applications. The quality indicator thus obtained is, on the one hand, robust against changes in the distribution and availability of grid points (network stations) providing data for the model generation; and on the other hand, accurately reflects spatio-temporal changes in the ionosphere or troposphere.

Indeed, the determination of an accurate and reliable QI in an ionosphere or troposphere grid model approach has a significant influence on the positioning of an NSS rover in the field by use of the QI value to weight the (ionospheric or tropospheric) delay observation in the positioning filter. In addition, integrity warnings may be triggered if the actual error exceeds the QI value by a certain value (e.g., *abs*(*residual*) *- QI >* 1 *m* ) or if the actual error exceeds a multiple of the QI: a reliable QI may prevent integrity violations caused by intermittent outages of network stations.

By considering old observations, as well as the previous QI value stored in a buffer, the method described above allows to derive a reliable and more realistic QI value for the current epoch. The new (re-evaluated) QI value will avoid discontinuities, when grid point observations become unavailable.

### OPERATIONS OF THE NSS ROVER

In a second aspect, the QI values determined by the network can be transmitted to an NSS rover to be further processed, as will be described in detail below. The grid model approach detailed above, will be used.

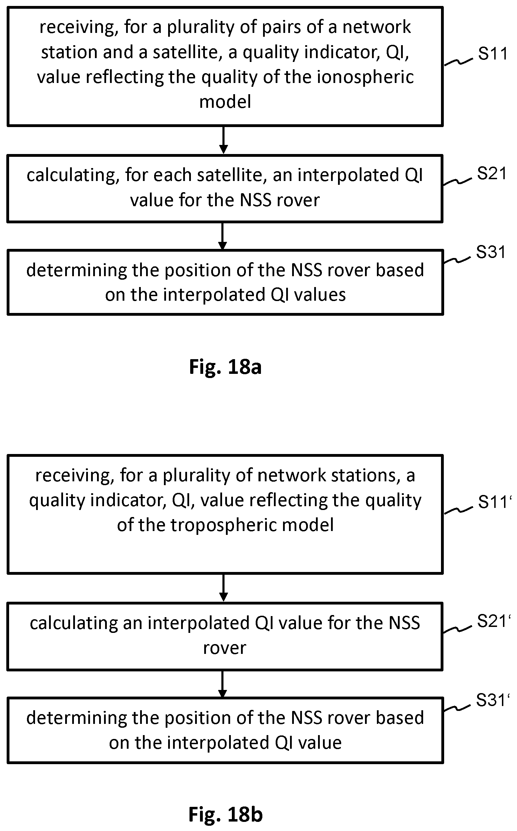

In an embodiment, as illustrated in Fig. 18a, the NSS rover receives, for a plurality of pairs of a network station and a satellite, a quality indicator, QI, value reflecting the quality of the ionospheric model, then calculates, for each satellite, an interpolated QI value for the NSS rover location. The NSS rover then determines its position based on the interpolated QI values.

Fig. 18b shows another embodiment where the NSS rover receives, for a plurality of network stations, a QI value reflecting the quality of the tropospheric model, then calculates an interpolated QI value for the NSS rover location. The NSS rover then determines its position based on the interpolated QI value.

In other words, the interpolated QI value is calculated based on a grid model, such as the model as described earlier.

As illustrated in Fig. 18a, a computer-implemented method uses an ionospheric model that models delays in signal propagation from a satellite to a receiver on the surface of the earth. The ionospheric model is based on ionosphere TEC observations from a plurality of network stations on the surface of the earth.

As illustrated in Fig. 18b, a computer-implemented method uses a tropospheric model that models delays in signal propagation from a satellite to a receiver on the surface of the earth, wherein the tropospheric model is based on troposphere delay observations from a plurality of network stations on the surface of the earth.

The methods illustrated in Fig. 18 may be carried out by one or a plurality of computers and/or servers, or more generally by any number of processing entities implemented in hardware, firmware, software, and/or using any form of machine-readable instructions. In a preferred embodiment, the method is carried out by an NSS rover. In another embodiment, the method is carried out partially or entirely in the cloud, i.e. by any number of processing entities in the cloud.

In step S11, a quality indicator, QI, is obtained for a plurality of pairs of a network station and a satellite, reflecting the quality of the ionospheric model.

The network stations in the plurality of pairs of a network station and a satellite are preferably located in a target region on the surface of the earth. The target region can be, for example, one or more cities, one or more countries, one or more continents or the whole earth. The NSS rover is preferably also located in the target region.

The QI value ${QI}_{k}^{s} \left({φ}_{k}, {λ}_{k}, {t}_{i}\right)$ is specific to a pair of a network station *k* and a satellite s and is transmitted to the NSS rover, preferably together with the polynomial coefficients and the residual part of the actual ionospheric delay.

In step S11', a quality indicator, QI, is obtained for a plurality of network stations, reflecting the quality of the tropospheric model.

The network stations are preferably located in a target region on the surface of the earth. The target region can be, for example, one or more cities, one or more countries, one or more continents or the whole earth. The NSS rover is preferably also located in the target region.

The (tropospheric) QI value ${QI}_{k}^{□} \left({φ}_{k}, {λ}_{k}, {t}_{i}\right)$ is specific to a network station *k* and is transmitted to the NSS rover, preferably together with the polynomial coefficients and the residual part of the actual tropospheric delay.

The steps S11 and S11' of receiving quality indicators can be implemented by receiving the quality indicators from network stations. Alternatively or in combination, the quality indicators can be stored in a data storage and obtained by reading the quality indicators from the storage.

In step S21, for each satellite, an interpolated QI value reflecting the quality of the ionospheric model is calculated for the NSS rover.

More specifically, as the received QI values ${QI}_{k}^{s} \left({φ}_{k}, {λ}_{k}, {t}_{i}\right)$ relate to the position of the respective network stations *k*, the NSS rover needs to determine a QI value that reflects the uncertainty of the ionospheric delay at its position (for a specific satellite *s*). This is done by interpolating at least part of the received QI values to the NSS rover's position.

In step S21', an interpolated QI value reflecting the quality of the tropospheric model is calculated for the NSS rover.

More specifically, as the received QI values ${QI}_{k}^{□} \left({φ}_{k}, {λ}_{k}, {t}_{i}\right)$ relate to the position of the respective network stations *k*, the NSS rover needs to determine a QI value that reflects the uncertainty of the tropospheric delay at its position. This is done by interpolating at least part of the received QI values to the NSS rover's position.

In steps S31 and S31', the position of the NSS rover is determined based on the interpolated QI value(s).

The steps S31 and S31' of determining the position of the NSS rover can involve processing the QI values sent to the NSS rover. Especially, with the QI values, the NSS rover can evaluate how much the ionospheric model can be trusted. The QI values can be received via one or more (e.g. geo-stationary) satellites and/or a mobile communication system (e.g. LTE and/or 5G).

In one embodiment of the ionospheric case, the *N* network stations closest to the NSS rover may be selected, with *N* being an integer greater than 1, and the interpolated QI value for a first satellite is calculated based on the received QI values for the pairs of the selected *N* network stations and the first satellite.

In one embodiment of the tropospheric case, the *N* network stations closest to the NSS rover may be selected, with *N* being an integer greater than 1, and the interpolated QI value is calculated based on the received QI values for the selected *N* network stations.

The *N* is preferably identical to the above number *N* which is used by the network to calculate the QI values. However, this is not necessarily the case and the number could be different.

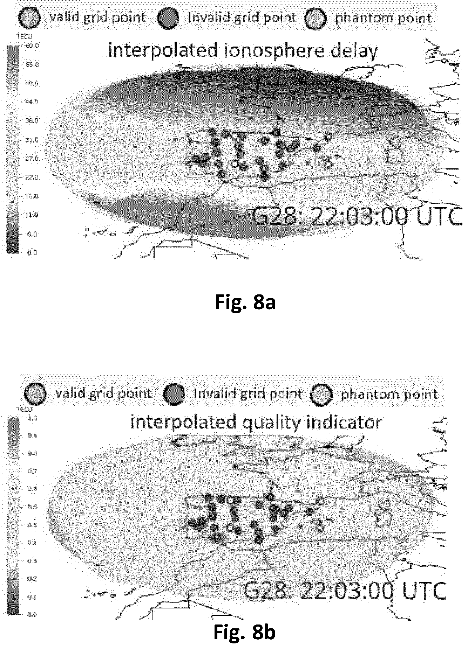

For instance, the interpolation may be performed using a minimum of 3 grid points and a maximum of 6 grid points. Fig. 8a and 8b show an example of a map of interpolated ionosphere delay and of a map of the corresponding interpolated QI values, respectively. In the map, there are valid grid points (network stations) and invalid grid points (network stations). The NSS rover can be informed about which stations are valid/invalid by the network, e.g. in a bitmap. An invalid grid point may correspond to a network station that does not transmit observations. Furthermore, there are phantom points which, however, are not relevant in the present context.

For example, in the ionospheric case, the interpolated QI value ${interQI}_{r}^{s} {\left({φ}_{r}, {λ}_{r}, {t}_{i}\right)}_{□}^{□}$ at the NSS rover position (*φᵣ*,*λᵣ*) at time interval *tᵢ* can be calculated from the received QI values ${QI}_{k}^{s} \left({φ}_{k}, {λ}_{k}, {t}_{i}\right)$ as follows: ${interQI}_{r}^{s} {\left({φ}_{r}, {λ}_{r}, {t}_{i}\right)}_{□}^{□} = \frac{1}{N} {\sum }_{j = 1 … N}^{□} □ {QI}_{j}^{s} {\left({φ}_{j}, {λ}_{j}, {t}_{i}\right)}_{□}^{□}$

For example, in the tropospheric case, the interpolated QI value ${interQI}_{r}^{□} {\left({φ}_{r}, {λ}_{r}, {t}_{i}\right)}_{□}^{□}$ at the NSS rover position (*φᵣ*,*λᵣ*) at time interval *tᵢ* can be calculated from the received QI values ${QI}_{k}^{□} \left({φ}_{k}, {λ}_{k}, {t}_{i}\right)$ as follows: ${interQI}_{r}^{□} {\left({φ}_{r}, {λ}_{r}, {t}_{i}\right)}_{□}^{□} = \frac{1}{N} {\sum }_{j = 1 … N}^{□} □ {QI}_{j}^{□} {\left({φ}_{j}, {λ}_{j}, {t}_{i}\right)}_{□}^{□}$

It should be noted that this arithmetic mean is just an example and that other interpolation methods can be used, e.g. a weighting based on the distance between the NSS rover and the respective network station, as explained above.

In one embodiment, the NSS rover further receives a validity radius (VR), and the selected *N* network stations are located within the validity radius around the rover.

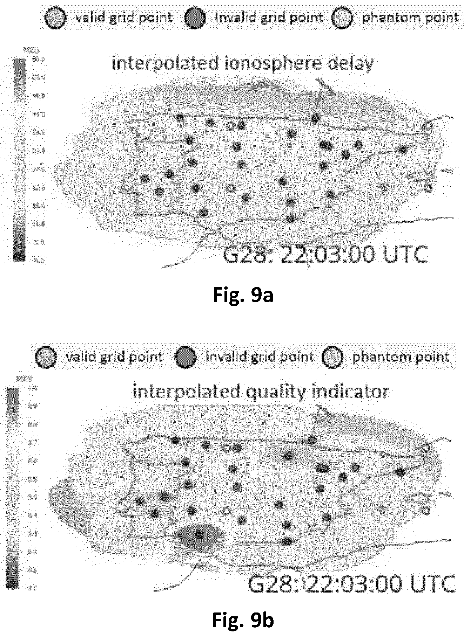

For example, the VR may be calculated in the manner described earlier and received by the rover. Following the same situation depicted in Fig. 8a and 8b with a manually chosen and arbitrarily large VR, Fig. 9a and 9b respectively show a map of interpolated ionosphere delay and a map of interpolated QI, but this time considering the realistic VR, determined by the above-described procedure. The valid area of the model is reduced due to a smaller validity radius applied in the interpolation.

In another embodiment, the interpolated QI value may be calculated as a weighted mean value of the QI values of the selected *N* network stations, and the weighting may be based on distances between the NSS rover and the selected *N* network stations.

The QI interpolation procedure can e.g. be performed using inverse squared distance, and the delay may be interpolated by means of a weighted polynomial fit, where the weighting may be based on the inverse of the squared distance between the rover position *Pᵣ* and the position *Pⱼ* of grid stations in the vicinity. For the interpolation of both quantities, the delay and the QI, to the rover position, a subset of stations at position *Pⱼ* may be used. Therefore, the VR may be used as a search radius around the position *Pᵣ* to find interpolation stations at positions *Pⱼ*, with *j* = 1,2,3,...,6. In this example, *j* = 1 is the closest station and *j* = 6 the most distant station among the 6 selected ones (it should be noted that the number 6 is just an example and any positive integer can be used). More specifically, the delays $\left({y}_{j}^{s}\left({φ}_{j}, {λ}_{j}, {t}_{i}\right)\right.$ for the ionospheric case and ${y}_{j}^{□} \left({φ}_{j}, {λ}_{j}, {t}_{i}\right)$ for the tropospheric case) and the QI values $\left({QI}_{j}^{s}\left({φ}_{j}, {λ}_{j}, {t}_{i}\right)\right.$ for the ionospheric case and ${QI}_{j}^{□} \left({φ}_{j}, {λ}_{j}, {t}_{i}\right)$ for the tropospheric case) given at the station with position *Pⱼ* of the 1 ≤ *j* ≤ 6 closest stations can be used. For the interpolation, at least three valid stations within the validity radius around the rover position may be required to be found, otherwise an interpolation may not be allowed.

As mentioned earlier, the interpolated value can also be determined by a weighted polynomial fit and a least squares estimation for the polynomial parameters P00 (offset), P01 (gradient in latitude direction) and P10 (gradient in longitude direction). In this case, the interpolated values for the delay at the rover position are the corresponding evaluated polynomials at *Pᵣ,* and thus yield ${f}_{delay}^{s} \left({φ}_{r}, {λ}_{r}, {t}_{i}\right)$ for the ionospheric case and ${f}_{delay}^{□} \left({φ}_{r}, {λ}_{r}, {t}_{i}\right)$ for the tropospheric case. The interpolated values for the QI, obtained by means of inverse squared distance weighting, correspond to ${interQI}_{r}^{s} {\left({φ}_{r}, {λ}_{r}, {t}_{i}\right)}_{□}^{□}$ and ${interQI}_{r}^{□} {\left({φ}_{r}, {λ}_{r}, {t}_{i}\right)}_{□}^{□}$, respectively.

This method can be further improved: Fig. 9b indicates that the interpolated QI value may provide misleading quality estimates for the rover. In particular, Fig. 9b shows a scattered distribution of values between 0.0 and 1.0 TECU. A comparison with actual observation residuals revealed that there are areas with too pessimistic QI values caused by individual stations and too optimistic QI values beyond the boundary of the network due to extrapolation effects.

To improve the method regarding these matters, the interpolated values may be further modulated by the so-called Centroid Ratio Weighting (CRW) method.

In one embodiment, the method may involve calculating the distance *d* between the centroid point (i.e., the focal point or center of gravity) of the selected *N* network stations and the position of the NSS rover, obtaining a centroid ratio (*CR*) by dividing the calculated distance (*d*) by the validity radius (VR), and scaling the interpolated QI value based on this centroid ratio (*CR*).

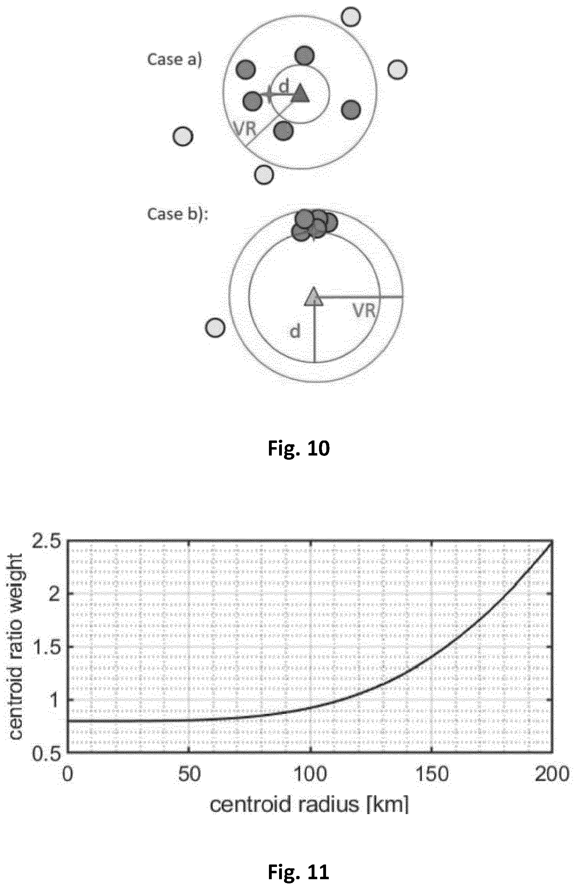

Fig. 10 further illustrates the meaning of the CR for two different situations: in case a), 5 valid stations (full dots) are determined within the VR (outermost circle) around the rover (triangle). The centroid point (cross) is determined and the centroid radius *d* is in turn derived as the distance between the rover position and the centroid point (innermost circle). In case b), the same representation is used, but this time in a situation where the valid stations are not distributed evenly around the rover, but are clustered in one direction.

In any case, the centroid ratio CR is determined as $CR = \frac{d}{VR}$ which describes a linear function depending on the centroid radius *d*. The centroid ratio is a measure for the distribution of the selected network stations and the quality of the interpolation geometry. In this example, *d* is the distance between the centroid point of the 5 stations used for the interpolation and the rover position *Pᵣ*. Again, it should be noted that the number 5is just an example and any positive integer can be used.

Obviously, the centroid ratio *CR* may take values between 0.0 and 1.0: 0.0 in case the interpolation stations are equally distributed around the rover, and 1.0 in case the interpolation stations are all located in the same direction with respect to the rover such that *d* = *VR*.

Once the centroid ratio is calculated, the interpolated QI value is adapted by means of the centroid ratio. Preferably, for the ionospheric case, the interpolated QI value is multiplied by the centroid ratio: 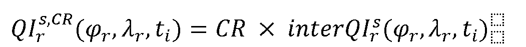 to obtain a scaled QI value ${QI}_{r}^{s , CR} \left({φ}_{r}, {λ}_{r}, {t}_{i}\right)$.

Also for the tropospheric case, the interpolated QI value is multiplied by the centroid ratio: 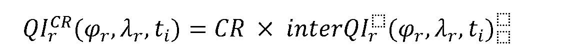 to obtain a scaled QI value ${QI}_{r}^{CR} \left({φ}_{r}, {λ}_{r}, {t}_{i}\right)$.

In another embodiment, the method may further comprise receiving an inflation base factor (BF) and an inflation factor (IF), calculating a centroid ratio weighting (CRW) based on the centroid ratio (CR), the inflation base factor (BF) and the inflation factor (IF), determining a corrected QI value by multiplying the interpolated QI value with the centroid ratio weighting (CRW), so that the position of the NSS rover may be determined based on the corrected QI value.

The CRW is determined and applied to the interpolated QI value, instead of using the centroid ratio (CR) as previously described. Further, in order to avoid deflation (due to CR < 1.0) when multiplying the interpolated QI with the determined ${CR}_{□}$ value, two further factors, that may be predefined and fixed, may be applied for further adaptation, namely an inflation base factor, *BF* and an inflation factor, *IF.*

These factors intend to avoid strong deflation of the interpolated QI value and allow an inflation for an increasing centroid radius. Both factors can be predefined in the QI generating algorithm taking into account the mean inter-station distances of the network and the typical ionospheric conditions in that region.

In another embodiment, the centroid ratio weighting (CRW) may be a function of the centroid ratio CR and the function can be monotonously increasing from the inflation base factor with an increase given by the inflation factor.

For example, the centroid ratio weighting *CRW* may be determined by: 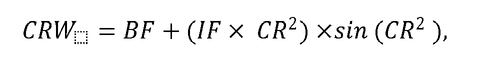 hereby describing a spatial function depending on the rover position within the network. Fig. 11 shows an example plot of ${CRW}_{□}$ with *BF* = 0.8 and *IF =* 2.0.

The final interpolated QI value ${QI}_{r}^{s} \left({φ}_{r}, {λ}_{r}, {t}_{i}\right) / {QI}_{r}^{□} \left({φ}_{r}, {λ}_{r}, {t}_{i}\right)$ can then be determined using the following relation: ${QI}_{r}^{s} \left({φ}_{r}, {λ}_{r}, {t}_{i}\right) = {QI}_{r}^{s , CR} \left({φ}_{r}, {λ}_{r}, {t}_{i}\right) \times {CRW}_{□} \left({φ}_{r}, {λ}_{r}\right)$ ${QI}_{r} \left({φ}_{r}, {λ}_{r}, {t}_{i}\right) = {QI}_{r}^{CR} \left({φ}_{r}, {λ}_{r}, {t}_{i}\right) \times {CRW}_{□} \left({φ}_{r}, {λ}_{r}\right)$

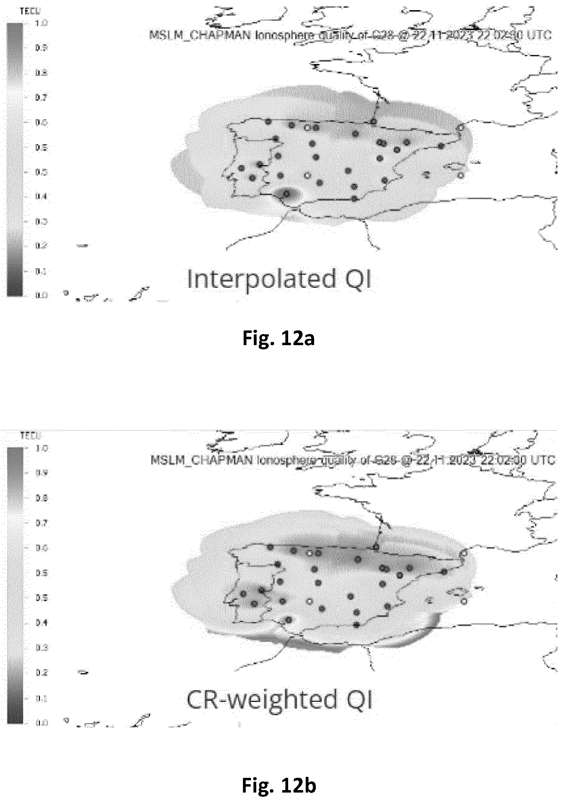

Fig. 12a and 12b respectively show an example of an interpolated quality indicator map before and after centroid ratio weighting, and demonstrate that applying a CR weighting to the interpolated QI allows for an inflation of the QI values at the boundaries and a smoothing of the QI in the center of the region.

In another embodiment, the method may further comprise receiving a centroid ratio threshold (CRT). Depending on the elevation of the first satellite, a factor *fact* is calculated, and if the centroid ratio (CR) is smaller than the centroid ratio threshold (CRT) multiplied by the calculated factor, no interpolation is performed for the first satellite.

The CRT is a constant that can be predefined, i.e., set on the server side and transmitted to the NSS rover, for further limiting the interpolation area to avoid extrapolation at the model boundaries. This can be particularly useful for setting (i.e. low-elevation) satellites when individual stations drop out, in order to reduce the supported region in a controlled manner.

If no interpolation is performed for a satellite, this means that observations from this satellite will not be used by the NSS rover to determine its position.

In another embodiment, the factor may be a monotonously increasing function of the elevation of the first satellite with positive values below 1.

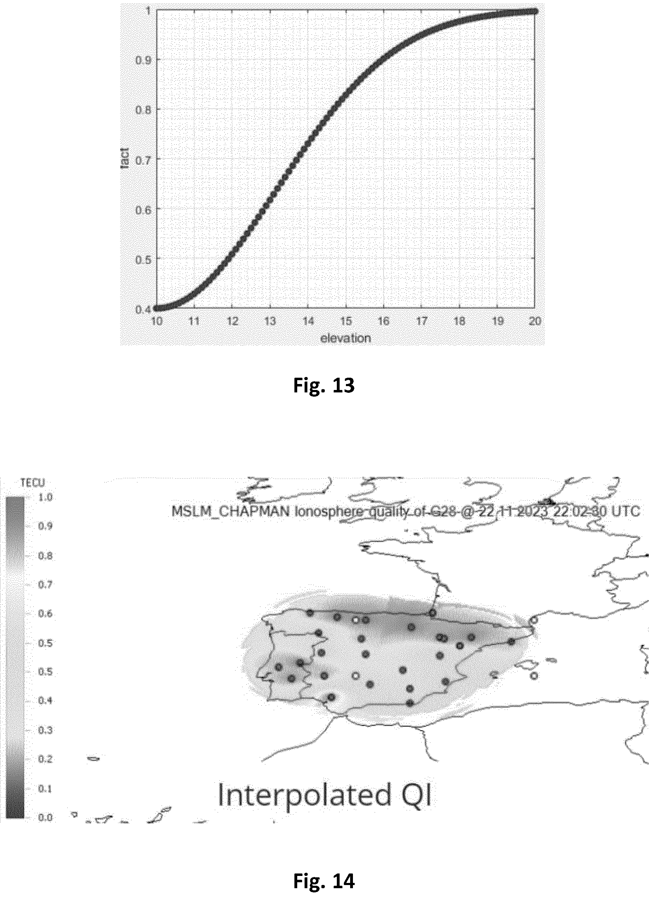

For example, the predefined CRT value may be reduced by the following factor *fact* depending on the satellite elevation *el* [deg], as depicted in Fig. 13: $fact = 0.4 + 0.6 \left(1-exp\left(-\left(el-10\right)\times \left(el-10\right)/20\right)\right)$ The reduction is applied to low-elevated satellites with an elevation between 10° and 20°. Then, the reduced threshold (*CRT* · *fact*) may be used to decide whether an interpolation should be allowed or not, in order to further restrict extrapolation under low elevation: for example, an interpolation may be allowed only if the criteria *CR >* (*CRT* · *fact*) is fulfilled.

Consequently, the interpolation procedure for the present example results in the QI map shown in Fig. 14, after weighting and thresholding.

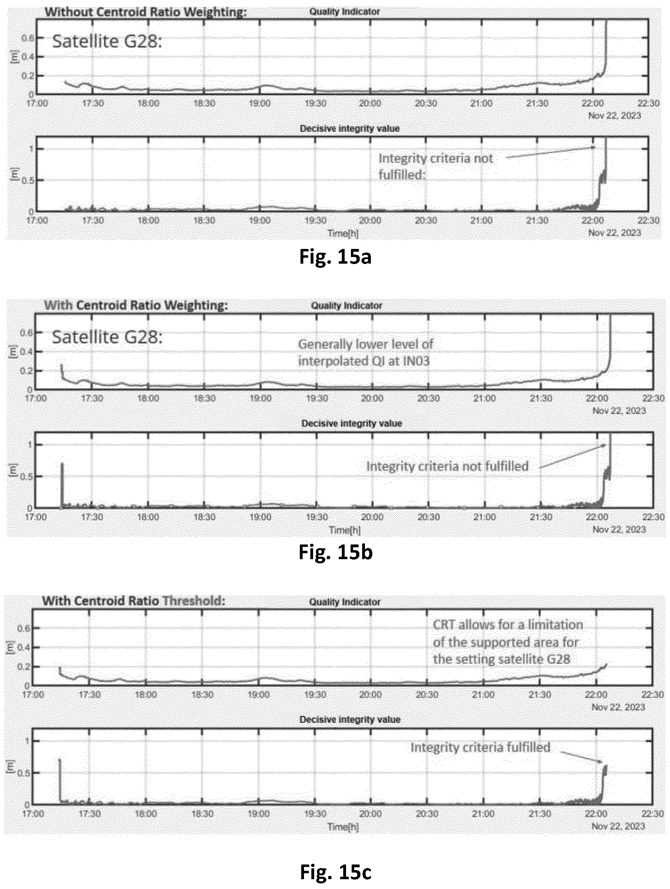

Fig. 15a, 15b and 15c respectively show decisive integrity values without CRW, with CRW and with CRW and CRT. Decisive integrity values are determined at individual integrity stations using the provided model. Thereby the integrity station acts like a rover. It is used to determine integrity information for a satellite-specific individual model by means of the integrity criterion abs(residual) - QI < 1 m, with the residuals calculated as the difference between the model delay and the actual delay at the integrity station. Compared to Fig. 15a, the application of the centroid ratio weighting depicted in Fig. 15b allows for a generally lower level of interpolated QI at the considered integrity station, further improved by the application of the CRT as depicted in Fig. 15c.

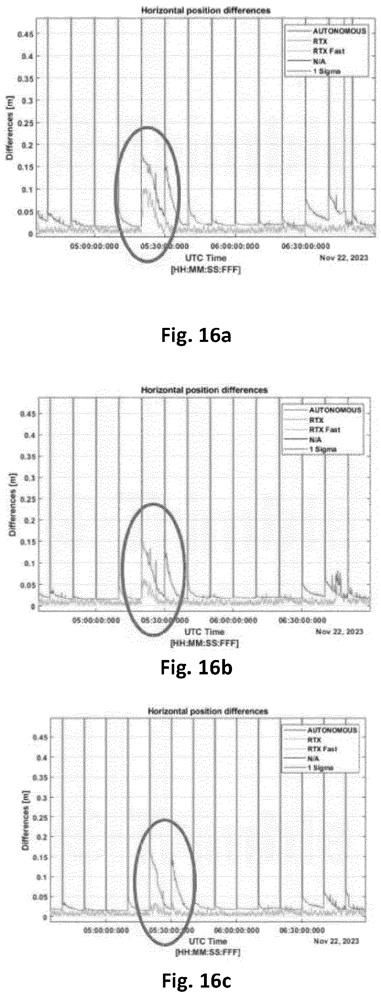

Fig. 16a, 16b and 16c respectively show convergence plots without CRW, with CRW and with CRW and CRT. Comparing Fig. 16a and Fig. 16b shows that convergence problems can be mitigated when introducing appropriate weighting of the QI, while Fig. 16c further indicates a significant reduction of convergence time when limiting the interpolation area using CRT.

In another embodiment, a processing entity in an NSS may comprise means for carrying out the method of any one of the previous embodiments.

The processing entity is capable of receiving and processing data, and may be for example an NSS receiver, or, as another example, an NSS receiver and another processing entity.

Fig. 21 shows an embodiment of the processing entity 2000. Processing entity 2000 comprises one or a plurality of computers and/or servers, or more generally any number of processing entities implemented in hardware, firmware, software and/or using any form of machine-readable instructions. Part of the processing entity 2000 may also encompass an NSS receiver and/or a processing entity capable of receiving data from the NSS receiver. The processing entity 2000 comprises a receiving unit 2010 adapted to perform step S11/S11' above, an interpolated QI determining unit 2020 adapted to perform step S21/S21' above (see also fig. 18) and a positioning unit 2030 adapted to perform step S31/S31' above.

According to these methods using the centroid ratio, a homogeneous and realistic interpolation of atmospheric delays and QI values can be achieved. Furthermore, extrapolation into areas not supported sufficiently by observations can be prevented.

In addition, the interpolated delay and QI used by the rover engine allows for a fast positioning convergence (convergence < 1 minute).

The CRW and CRT allow for mitigation of integrity failures by adapting the interpolated QI value and limiting the validity area of the grid model.

Any of the above-described methods and their embodiments may be implemented, at least partially, by means of a computer program or a set of computer programs. The computer program(s) may be loaded on an apparatus or device, such as for example a server (which may comprise one or a plurality of computers), an NSS receiver (running on a rover station, on a reference station, or within a vehicle) and/or an NSS receiver chipset for mobile phones or automotive applications. Therefore, the invention also relates, in some embodiments and/or aspects, to a computer program or set of computer programs, which, when carried out on an apparatus as described above, such as for example an NSS receiver (running on a rover station, on a reference station, or within a vehicle) or a server, carries out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magneto-optical disk, an SSD, a CD-ROM, a DVD, a CD, a flash memory unit, or the like, wherein the computer program is permanently or temporarily stored. In some embodiments, a computer-readable medium (or a computer-program product) has computer-executable instructions for carrying out any one of the methods of the invention.

In one embodiment, a computer program as claimed may be delivered to the field as a computer program product, for example through a firmware or software update to be installed on receivers already in the field. This applies to each of the above-described methods and systems.

NSS receivers may include one antenna or a plurality of antennas, to receive the signals at the frequencies broadcast by the satellites, processor units, one or a plurality of accurate clocks (such as crystal oscillators), one or a plurality of central processing units (CPU), one or a plurality of memory units (RAM, ROM, flash memory, or the like), and a display for displaying position information to a user.

The above-mentioned units and sub-units may be implemented for example using hardware, software, firmware, any combination of hardware, software, and firmware, preprogrammed ASICs (application-specific integrated circuits), or any other form of machine-readable instructions. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

### [Reference list]

[1] Hofmann-Wellenhof, B., et al., *"GNSS, Global Navigation Satellite Systems, GPS, GLONASS, Galileo, & more",* Springer-Verlag Vienna, 2008, ISBN 978-3-211-73012-6.
[2] RTCM Standard 10403.2, "Differential GNSS (Global Navigation Satellite Systems) Services - Version 3", February 1, 2013, RTCM Paper 104-2013-SC104-STD, Radio Technical Commission for Maritime Services, Arlington, Virginia, U.S.
[3] European Commission. "European GNSS (Galileo) Open Service - Ionospheric Correction Algorithm for Galileo Single Frequency Users", issue 1.2, September 2016.
[4] M. Mäkelä, S. Ali-Löytty, P. Müller and R. Piché, "Parametrization and prediction of EGNOS GIVD values" 2017 International Conference on Localization and GNSS (ICL-GNSS), Nottingham, UK, 2017, pp. 1-5, doi: 10.1109/ICL-GNSS.2017.8376258.
[5] Opperman, B.D.L.; Cilliers, P.J.; McKinnell, L.A.; Haggard, R. "Development of a regional GPS-based ionospheric TEC model for South Africa". Adv. Space Res. 2007, 39, 808-815, doi: 10.1016/j.asr.2007.02.026.
[6] 3GPP standard TS 37.355, V17.7.0, 2024.
[7] IS-QZSS-L6-001, "Quasi-Zenith Satellite System Interface Specification - Centimetre Level Augmentation Service", Cabinet Office, November 5, 2018.

## Claims

1. A computer-implemented method in a navigation satellite system, NSS, using an ionospheric model that models delays in signal propagation from a satellite to the surface of the earth, wherein the ionospheric model is based on ionosphere slant total electron content, TEC, observations from a plurality of network stations on the surface of the earth, wherein the method is performed by an NSS rover and comprises:
receiving, for a plurality of pairs of a network station and a satellite, a quality indicator, QI, value reflecting the quality of the ionospheric model;
calculating, for each satellite, an interpolated QI value for the NSS rover; and
determining the position of the NSS rover based on the interpolated QI values.

2. The method of claim 1, wherein the method further comprises:
selecting the N network stations closest to the NSS rover, N being an integer greater than 1, wherein
the interpolated QI value for a first satellite is calculated based on the received QI values for the pairs of the selected N network stations and the first satellite.

3. A computer-implemented method in a navigation satellite system, NSS, using a tropospheric model that models delays in signal propagation from a satellite to the surface of the earth, wherein the tropospheric model is based on troposphere delay observations from a plurality of network stations on the surface of the earth, wherein the method is performed by an NSS rover and comprises:
receiving, for a plurality of network stations, a quality indicator, QI, value reflecting the quality of the tropospheric model;
calculating an interpolated QI value for the NSS rover; and
determining the position of the NSS rover based on the interpolated QI value.

4. The method of claim 3, wherein the method further comprises:
selecting the N network stations closest to the NSS rover, N being an integer greater than 1, wherein
the interpolated QI value is calculated based on the received QI values for the selected N network stations.

5. The method of claim 2 or 4, wherein
the method further comprises receiving a validity radius (VR), and
the selected N network stations are located within the validity radius around the NSS rover.

6. The method of claim 2, 4 or 5, wherein
the interpolated QI value is calculated as a weighted mean value of the QI values of the selected N network stations, and
the weighting is based on distances between the NSS rover and the selected N network stations.

7. The method of claim 5 or 6, wherein the method further comprises:
calculating the distance (d) between the centroid point of the selected N network stations and the position of the NSS rover;
obtaining a centroid ratio (CR) by dividing the calculated distance (d) by the validity radius (VR); and
scaling the interpolated QI value based on the centroid ratio (CR).

8. The method of claim 7, wherein the method further comprises:
receiving an inflation base factor (BF) and an inflation factor (IF);
calculating a centroid ratio weighting (CRW) based on the centroid ratio (CR), the inflation base factor (BF) and the inflation factor (IF);
determining a corrected QI value by multiplying the interpolated QI value with the centroid ratio weighting (CRW),
wherein the position of the NSS rover is determined based on the corrected QI value.

9. The method of claim 8, wherein the centroid ratio weighting (CRW) is a function of the centroid ratio and the function is monotonously increasing from the inflation base factor with an increase given by the inflation factor.

10. The method of any one of claims 2 and 6-9, wherein the method further comprises receiving a centroid ratio threshold (CRT);
depending on the elevation of the first satellite, calculating a factor; and
if the centroid ratio (CR) is smaller than the centroid ratio threshold (CRT) multiplied by the calculated factor, no interpolation is performed for the first satellite.

11. The method of claim 10, wherein the factor is a monotonously increasing function of the elevation of the first satellite with positive values below 1.

12. A NSS rover, comprising means for carrying out the method of any one of claims 1-11.

13. A computer program comprising instructions which, when the program is executed by a computer, cause the computer to carry out the method of any one of claims 1-11.

14. A computer-readable storage medium comprising instructions which, when executed by a computer, cause the computer to carry out the method of any one of claims 1-11.
